Europäisches Patentamt

**European Patent Office**

Office européen des brevets

(11) Veröffentlichungsnummer: **0 118 775**

**A2**

(12) **EUROPÄISCHE PATENTANMELDUNG**

(21) Anmeldenummer: **84101355.0**

(22) Anmeldetag: **10.02.84**

(51) Int. Cl.³: **A 01 B 49/02**

(30) Priorität: **12.02.83 DE 3304961**

(43) Veröffentlichungstag der Anmeldung:
**19.09.84 Patentblatt 84/38**

(84) Benannte Vertragsstaaten:
**AT CH FR GB LI**

(71) Anmelder: **Weichel, Ernst**
**Bahnhofstrasse 1**
**D-7326 Heiningen(DE)**

(72) Erfinder: **Weichel, Ernst**
**Bahnhofstrasse 1**
**D-7326 Heiningen(DE)**

(54) **Gerätekombination zur Bodenlockerung und Saatbettherrichtung.**

(57) Eine landwirtschaftliche Gerätekombination zur Bodenlockerung weist zwei quer zur Fahrtrichtung liegende, separate, rohrförmige Tragrahmen (3 bzw. 18) auf, die jeweils mit konsolartigen Elementen (30, 32 bzw. 33, 37) versehen und über entsprechenden Bolzen (35, 36) als eine Art Schnellkupplung miteinander verbindbar sind. Einer der Rahmen (3) dient dabei zur Halterung der Stiele (7 bzw. 7a) von scharförmigen Lockerungswerkzeugen (9, 10 bzw. 10a), die andere (18) trägt ein rotierendes Arbeitsgerät (16, 17) zur Bodenkrümelung.

Fig. 2

ERNST WEICHEL

D 7326 HEININGEN

8. Februar 1984

0118775

-|-

Gerätekombination zur Bodenlockerung und Saatbettherrichtung

Die Erfindung bezieht sich auf eine Gerätekombination, die wenigstens ein Arbeitsgerät zur Bodenlockerung mit einem sich quer zur Fahrtrichtung erstreckenden, mit dem Kraftheber eines Schleppers kuppelbaren Rahmen aufweist, an dem vorzugsweise seiten- und höhenverstellbare Haltestiele mit an ihrem unteren Ende angebrachten Lockerungsscharen befestigt sind, hinter dem der quer zur Fahrtrichtung verlaufende Rahmen eines Gerätes zur Saatbettherrichtung angeordnet ist, an dem wenigstens eine angetriebene, mit Werkzeugen zur Krümelung des Bodens besetzte, rotierende Welle gelagert ist.

Wenn das Gerät zur Saatbettherrichtung in bekannter Weise z. B. über höhenbewegliche Lenker in einem gewissen Abstand

- 2 -

hinter dem Gerät zur Bodenlockerung angeordnet ist, können beide Geräte in unterschiedlich einstellbaren Höhenlagen arbeiten und auch leicht voneinander getrennt, sowie auch einzeln eingesetzt oder mit anderen Arbeits-Geräten kombiniert werden. Diese Gerätekombinationen sind aber so lang gebaut und so schwer, daß sie z.B. von leichten Schleppern nicht ausgehoben und auch hinter schweren Schleppern nicht mit jeder üblichen Drillmaschine kombiniert werden können.

Deshalb wurden sog. "Kombigrubber" entwickelt, die aus einem einzigen Rahmen bestehen, an dem Werkzeuge zur Bodenlockerung und eine starr an diesem gelagerte Welle mit rotierenden Werkzeugen zur Saatbettherrichtung angeordnet sind. Diese Kombination hat den Vorteil, daß die Haltestiele für die Lockerungswerkzeuge auch zwischen den Bewegungsbahnen der radialen Zinken des Gerätes zur Saatbettherrichtung angeordnet und und daher Verstopfungen (z.B. in langem Getreide- oder Körnermaisstroh) vermieden werden können, weil die rotierenden Zinken etwa vor den Stielen angestautes Fördergut abstreifen und nach hinten werfen können.

Ein weiterer Vorteil besteht darin, daß dieser Kombigrubber so kurz, wie es überhaupt theoretisch möglich ist, gebaut werden kann. Er kann daher auch von leichten Schleppern getragen, insbesondere am Feldrand auch ausgehoben und hinter mittleren Schleppern auch mit einer Drillmaschine kombiniert werden.

0118775

Ein Nachteil besteht aber darin, daß jeder Haltestiel höhenverstellbar am Rahmen des Gerätes befestigt werden muß, und daß die Werkzeuge zur Bodenlockerung stets gleichzeitig mit den Werkzeugen zur Saatbettherrichtung eingesetzt werden müssen. Evtl. könnten zwar die Haltestiele der Werkzeuge zur Bodenlockerung so tief gestellt werden, daß sich die rotierenden Zinken ausschließlich oberhalb des Erdbodens drehen, wenn der Boden (z.B. unter einer Gründüngung) lediglich tief gelockert werden soll, die Bodenoberfläche aber nicht zerkleinert werden darf. Das hätte aber den Nachteil, daß unnützes Gerätegewicht mitgeführt werden muß.

In anderen Fällen (wenn z.B. die Bodenoberfläche nur flach gekrümelt werden soll, um z.B. Unkraut ggf. in Getreidebeständen zerstören, ohne daß es zulässig wäre, tiefe Bodenschichten gleichzeitig zu lockern), müssen die Haltestiele der Lockerungswerkzeuge einzeln entfernt werden. Das verursacht lästige Rüstzeiten. Außerdem ist es nicht möglich, die Werkzeuge zur Bodenlockerung z.B. auch mit anderen im Betrieb vorhandenen Geräten zur Saatbettherrichtung und zur Oberflächenbearbeitung (z.B. Walzen usw.) zu kombinieren.

Ein Vorteil der starren Geräte-Kombination besteht zwar darin, daß die Zinken der Rotoregge auch bei großer Arbeitstiefe oder bei sehr harten Boden die einmal eingestellte Arbeitstiefe genau einhalten müssen, weil sie auch beim Auftreffen auf Steine oder harte Schollen nicht nach oben ausweichen können. Sie werden von den mit ihnen verbundenen Werkzeugen zur Bodenlockerung sicher im Erdreich gehalten. Dies hat aber z.B. auf steinigem Boden oder bei geringer Arbeitstiefe der rotierenden Werkzeuge den Nachteil, daß die Zinken beim Auftreffen auf einen größeren Stein nicht nach oben ausweichen können und daher evtl. abbrechen oder zum Ansprechen einer Rutschkupplung in der Gelenkwelle führen.

Die durch die vorliegende Erfindung gelöste Aufgabe besteht daher darin, eine Geräte-Kombination zur Bodenlockerung und Saatbettherrichtung zu schaffen, welche alle Nachteile der starren oder höhenbeweglichen Geräteverbindungen vermeidet, aber alle Vorteile der verschiedenen bekannten Kombinationen aufweist. Insbesondere soll das Gerät zur Bodenlockerung wahlweise starr oder höhenbeweglich mit dem Gerät zur Saatbettherrichtung verbunden werden können, die geringst mögliche Baulänge der Kombination aufweisen und außerdem sollen beide Geräte leicht angekuppelt und getrennt werden können.

Beide Geräte sollen auch z.B. durch Lenker höhenbeweglich und in einem größeren Abstand voneinander aneinander angekuppelt werden können, (wenn z.B. das Gerät zur Saatbett-

- 5 -

herrichtung (z.B. auf steinigem Boden oder bei sehr geringer Arbeitstiefe) durch Stützräder in genauer (flacher) Arbeitstiefe geführt werden muß) und sie sollen auch besonders leicht voneinander getrennt bzw. miteinander gekoppelt werden können.

Dies hat den Vorteil, daß die Besitzer zweier derart kombinierbarer Einzelgeräte alle denkbaren Kombinationsarten ausnützen und jedes Gerät auch separat einsetzen oder es mit sonstigen Arbeitsgeräten, z.B. Drillmaschinen, Walzen o.ä. kombinieren können.

Die Erfindung wird in den Zeichnungen Figur 1 bis 12 derart dargestellt, daß Merkmale, die in einer Figur gezeichnet oder beschrieben sind, in sinngemäßer Weise auch auf andere Ausführungsbeispiele übertragbar sein sollen.

Es zeigen:

Fig. 1 eine teilweise geschnittene Teil-Seitenansicht,

Fig. 2 eine andere, teilweise geschnittene Teil-Seitenansicht,

Fig. 3 eine Draufsicht auf ein Ausführungsbeispiel der vorliegenden Erfindung,

Fig. 4 eine weitere, teilweise geschnittene, Seitenansicht auf ein anderes Ausführungsbeispiel,

Fig. 5 eine teilweise geschnittene Seitenansicht auf das Gerät zur Bodenlockerung vor dem Ankuppeln,

- 6 -

Fig. 6       eine entsprechende Ansicht auf das
             Gerät zur Saatbettherrichtung vor
             dem Ankuppeln,

Fig. 7       eine teilweise geschnittene Seitenansicht auf ein Gerät zur Saatbettherrichtung mit Zusatzteilen für den
             separaten Einsatz,

Fig. 8+9     schematische, teilweise geschnittene
             Seitenansichten, und

Fig. 10      eine Teil-Draufsicht auf weitere, sich
             in Einzelheiten voneinander unterscheidende Ausführungsbeispiele

Fig. 11      eine teilweise geschnittene Seitenansicht,

Fig. 12      eine Draufsicht auf ein weiteres Ausführungsbeispiel.

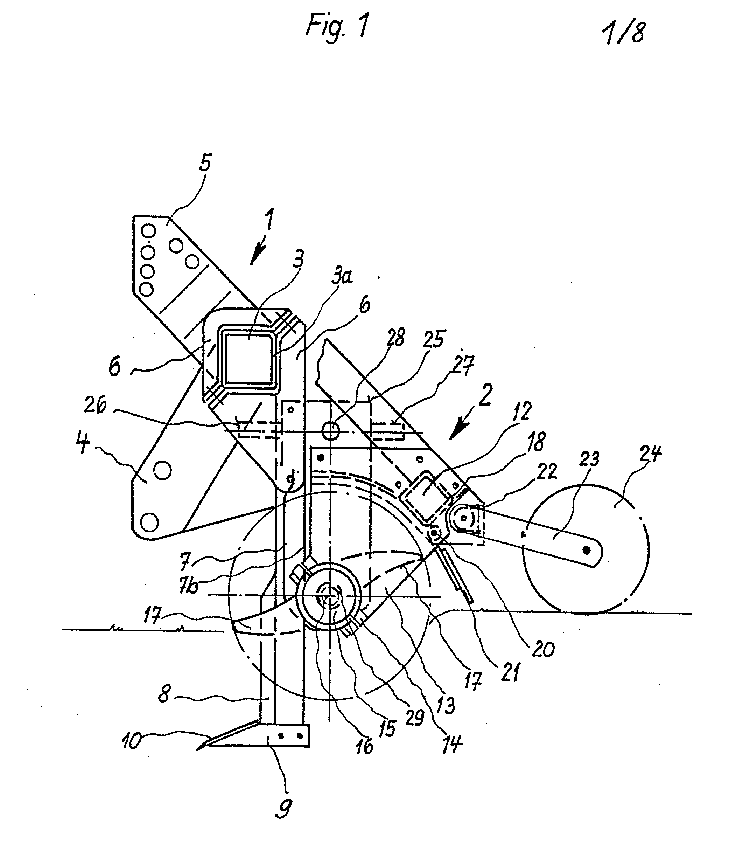

Wie die Figuren 1, 2 und 3 zeigen, weist das Gerät zur Bodenlockerung 1 einen quer zur Fahrtrichtung liegenden Rahmen 3 auf, der an seiner Vorderseite mit Unterlenkerkonsolen 4 und einer Oberlenkerkonsole 5 versehen ist. Am Rahmen 3, der aus einem kräftigen Vierkantrohr bestehen kann, sind mehrere Klemmhalter 6 angebracht, an denen Haltestiele 7 entweder in einer hinter der hinteren Kante 3a des Tragrohres oder (7a) in der vorderen Stellung vor dem Tragrohr 3 angebracht sind, die an ihrem unteren Ende auf der Vorderseite eine spitz zulaufende Verschleißleiste 8 und Anschraubscharhalter 9 für Blattschare 10 tragen.

Hinter dem Gerät zur Bodenlockerung 1 befindet sich der Rahmen 12 eines Gerätes zur Saatbettherrichtung 2, der seitliche Lagerschilde 13 mit einem Klemmlager 14 aufweist, in dem Lagerbüchsen 15 für eine Welle 16 gehalten sind, auf welcher Radialzinken 17 zur Krümelung des Bodens spiralig angeordnet sind.

Es könnten auch andere Zinken oder Werkzeuge zur Zerkleinerung des Bodens, z.B. Fräsmesser oder Zinken einer Kreiselegge verwendet werden.

Das Querrohr 18 des Rahmens 12 ist mit einem Hohlträger 19 verbunden, der auf seiner Unterseite kreisbogenförmig gestaltet ist.

Am unteren Ende des Querrohrs 18 befindet sich ein Scharnier 20 für ein Streichblech 21 und ein nach hinten ragender Lagerbügel 22 für den Lagerarm 23 einer zusätzlichen, abnehmbaren Packerwalze 24.

In der Mitte ist über Flanschbleche 40 ein Getriebe 40 angeordnet, das eine Eingangswelle 26, eine hintere Abtriebswelle 27 und eine seitliche obere Abtriebswelle 28 sowie eine untere Abtriebshohlwelle 29 aufweist, in der die außen in den Lagerbüchsen 15 gelagerten Wellen 16 über Keilbüchsen und Keilprofile drehfest gelagert sind.

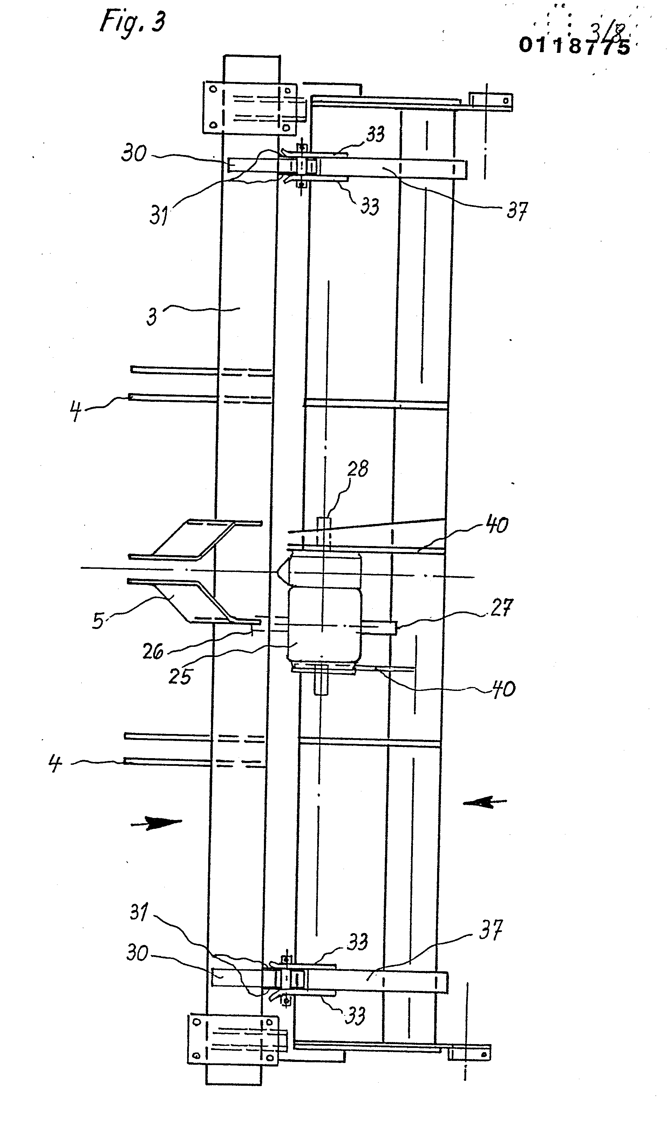

Wie Fig. 3 zeigt, sind an den Außenseiten des Rahmens 3 Streben 30 angebracht, die an ihrem oberen Ende kastenförmige Fangbleche 31 aufweisen. Am Rahmen 12 des Gerätes 2 sind Konsolen angebracht, die Fangbleche 33 aufweisen, in welche in unterschiedlicher Höhenlage in Bohrungen 34 Bolzen 35 einsteckbar sind, so daß der an den Fangblechen 31 gehalterte Fanghaken 32 beim Heranfahren mit dem Traktor und beim Anheben des Rahmens 3 unter die Bolzen 35

0118775

greifen kann. Wenn das Gerät zur Saatbettherrichtung und Krümelung 2 durch Ausheben des Gerätes zur Bodenlockerung 1 mit der Schlepperhydraulik (nicht dargestellt) angehoben wird, schwenkt dieses Gerät mit seinem unteren Teil nach vorne, so daß die Fangbleche 33 mit ihrer vorderen Kante am Rahmenrohr 3 anliegen. Durch Einstecken eines unteren Bolzens 36 in die Fangbleche 31 und 33 wird eine feste, aber leicht lösbare und in verschiedener Höhenlage verriegelbare Verbindung zwischen den beiden Arbeitsgeräten 1 und 2 geschaffen.

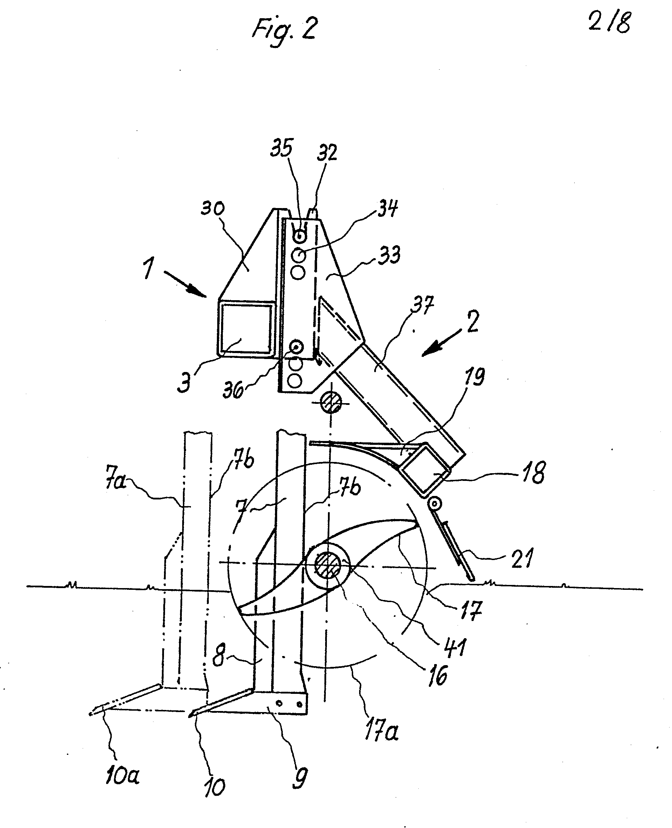

Wenn die Haltestiele 7 am hinteren Ende des Rahmenrohres 3 mit ihrer vorderen Kante anliegen, liegt ihre hintere Kante 7b unmittelbar, d.h. in einem sehr geringen Abstand vor den auf die Welle 16 geschobenen Naben bzw. Zwischenstücken 41 der Radialzinken 17, so daß die Bewegungsbahnen 17a der Radialzinken über die vordere Kante des Haltestieles 7 hinausragen und etwa an dem Stiel festsitzendes, halmartiges Gut abstreifen und nach hinten werfen bzw. in die gelockerte Erde einmischen können. Wenn dagegen die Haltestiele 7a, wie in Fig. 2 strichpunktiert dargestellt, mit den umsetzbaren Klemmhaltern 6 (Fig. 1) auf die Vorderseite des Rahmenrohres 3 montiert werden, liegen die Hinterkanten 7b der Haltestiele in einem Abstand vor den Bewegungsbahnen 17a der Radialzinken 17. Dies ist dann vorteilhaft, wenn keine größeren Strohreste auf der Bodenoberfläche vorhanden sind, aber z.B. bei relativ geringer Arbeitstiefe breitflächige Flügelschare verwendet werden sollen, deren hintere Kanten naturgemäß vor den Bewegungsbahnen 17a der Zinken 17 liegen sollten,
damit es nicht zur Einklemmung von Steinen o.ä. kommt.
Wenn dagegen die Stiele 7 zwischen den Zinken 17 verlaufen,
werden vorzugsweise Blattschare (oder Flügelschare mit
stumpferer Winkelstellung) verwendet und es wird vorzugsweise auch eine größere Arbeitstiefe eingehalten, weil
die Flügelschare auch die Welle 16 mit den Zinken 17 selbst
beim Auftreffen auf Steine gut im Boden halten.

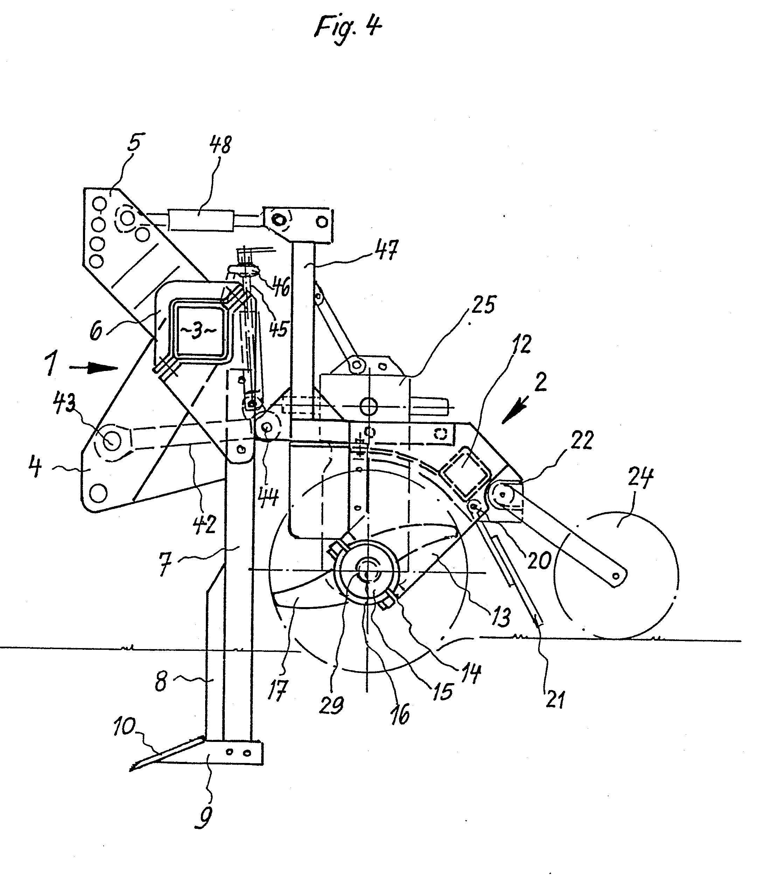

Fig. 4 zeigt eine andere Kombination, bei der das Gerät
zur Saatbettherrichtung, wie bisher üblich, an Unterlenkern
42 so aufgehängt ist, daß die Bewegungsbahnen 17a der Zinken
17 in einem Abstand hinter der hinteren Kante der Stiele 7
verlaufen. Die Unterlenker 42 sind mit ihrem vorderen Ende
an der Unterlenkerkonsole 4 z.B. über einen Steckbolzen 43
angelenkt. Der Unterlenker 42 wird mit Unterlenkerbolzen
44 des Gerätes zur Saatbettherrichtung 2 gelenkig verbunden
und über bekannte, höhenverstellbare Spindeln 45, die in
Kugelaugen 46 gehalten sind, derart in einer einstellbaren
Höhenlage geführt, daß die tiefste Stellung des Geräts zur
Saatbettherrichtung 2 (und damit der Zinken 17) einstellbar
ist, dieses Gerät/z.B. entsprechend der Höhenlage der sich

- 10 -

auf dem Erdboden abstützenden Krümelwalze 24 sich auch durch Verschieben der Spindel in dem Kugelauge 46 an den Boden anpassen kann.

Der Anbaubock 47 des Gerätes zur Krümelung 2 ist durch den Oberlenker 48 mit der Oberlenkerkonsole 5 des Geräts zur Bodenlockerung 1 verbunden.

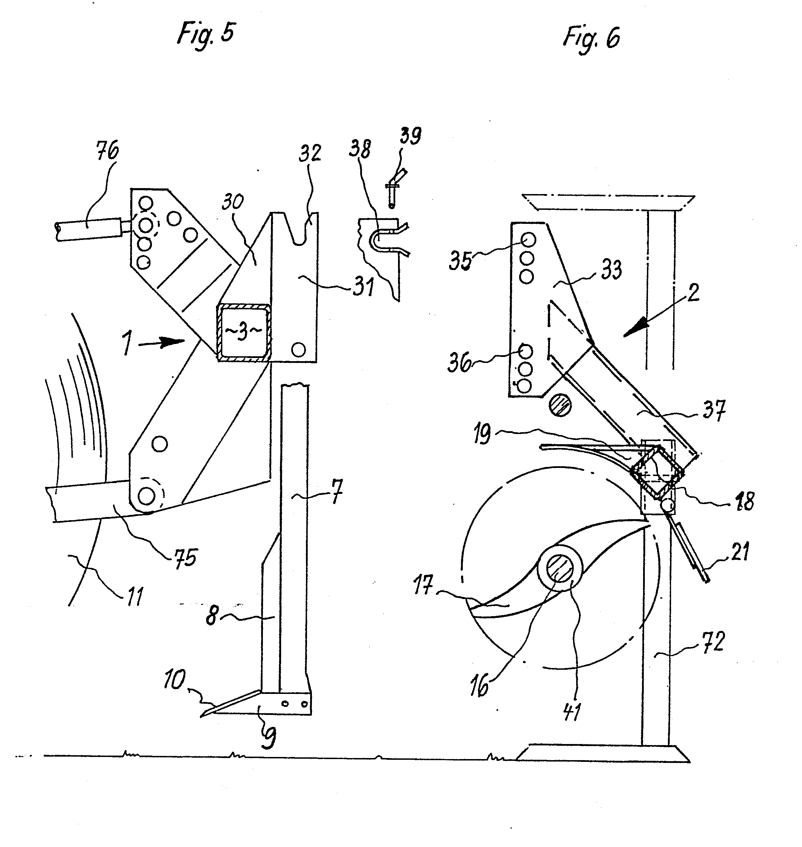

Fig. 5 und 6 zeigen den Rahmen 3 mit den daran angebrachten Fangblechen 31 des Gerätes zur Bodenlockerung 1 vor dem Ankuppeln des Gerätes zur Saatbettherrichtung 2, um die Details der Fangbleche 31 und 33 sichtbar zu machen. Das Gerät zur Saatbettherrichtung 2 wird auf der Abstellstütze 72 so hoch über dem Erdboden aufgestellt, daß das Gerät zur Bodenlockerung 1 über dem Erdboden bewegt werden und der Fanghaken 32 unter bzw. das Fangmaul 38 mit Stecker 39 um den Bolzen 35 greifen kann.

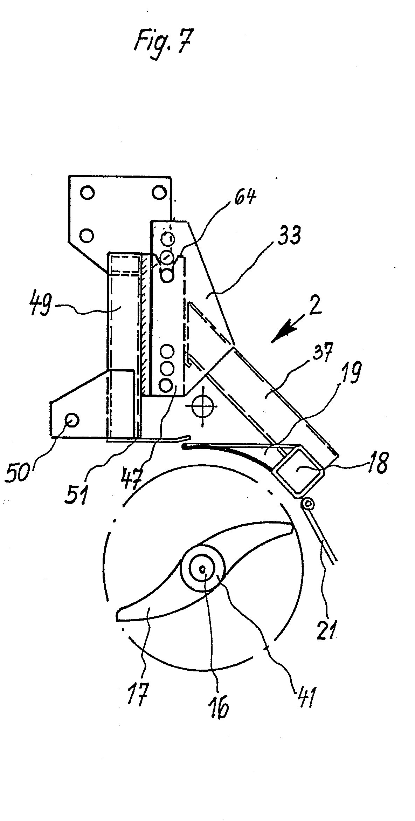

Fig. 7 zeigt einen Zusatzbock 49 mit nach vorne verlagertem Anschlußbolzen 50 für den Unterlenker des nicht dargestellten Schleppers und ein an diesem angebrachtes Deckblech 51, das sich über die ganze Breite der Rotoregge 2 erstreckt und eine Verlängerung des Hohl-trägers 19 nach vorne bildet. Der Zusatzbock 49 wird über den Fanghaken 64 an den Fangblechen 33 in gleicher Weise eingehängt, wie der Rahmen 3. Das Gerät zur Saatbettherrichtung 2 kann damit auch separat am Schlepper 11 angehängt oder vor bzw. hinter sonstigen Arbeitsgeräten verwendet werden.

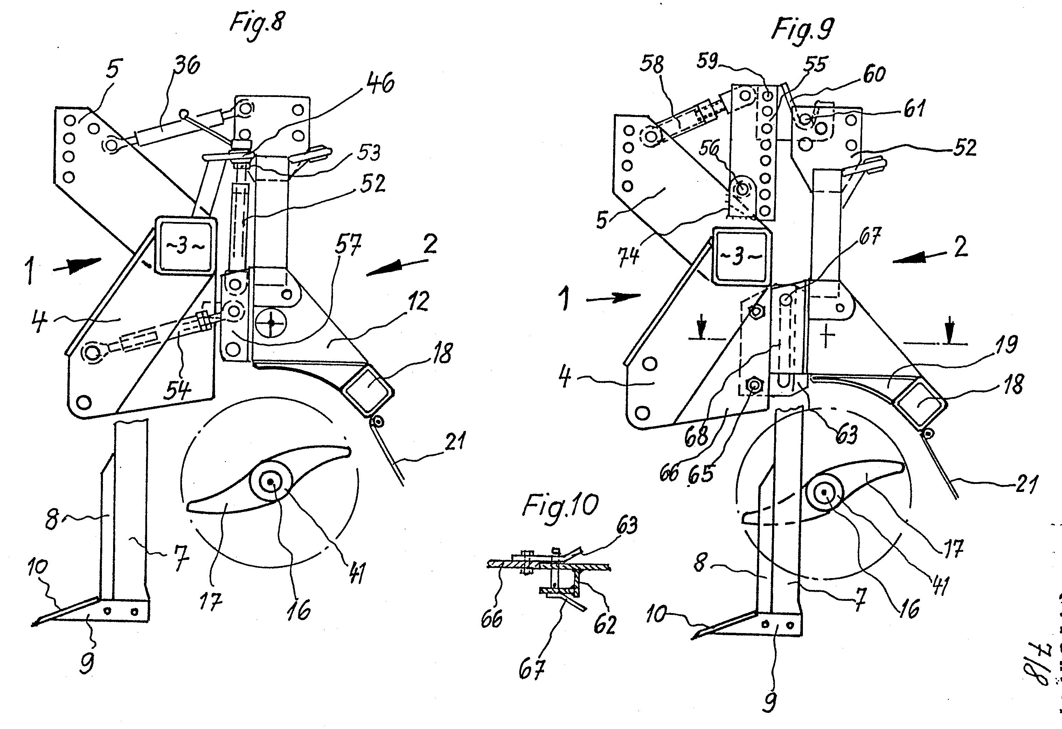

Fig. 8 zeigt ein anderes Ausführungsbeispiel, in dem die starre Verbindung des Gerätes zur Saatbettherrichtung 2 über Oberlenker 36 sowie an Anschlußkonsolen 57 angreifende Spindeln 52, die in Kugelaugen 46 gehalten und durch Spindelmuttern 53 starr gestellt, sowie durch ein Spannschloß 54 nach dem Ankuppeln fest mit dem Gerät zur Bodenlockerung 1 verbunden werden können, hergestellt wird.

In Fig. 9 ist eine einfachere Vorrichtung zum leichten Zusammenbauen und Lösen beider Geräte 1 bzw. 2 dargestellt. Sie besteht aus zwei Lochplatten 55, die über einen Bolzen 56 in Anschweißkonsolen 74 und ein Spannschloß 58 an der Rückseite des Oberlenkerbockes 5 befestigt sind, und in denen über Stecker 59 oder Schrauben ein höhenverstellbarer Fanghaken 60, der nach hinten ragt, in unterschiedlichen Höhenlagen befestigt werden kann. Er greift beim Heranfahren in Rückwärtsfahrt des Gerätes zur Bodenlockerung 1 an dem Gerät zur Krümelung 2 unter einen Verbindungsbolzen 61 in der Oberlenkerkonsole 77 des Gerätes zur Saatbettherrichtung 2, so daß dieses sehr leicht angekuppelt werden kann, ohne daß der Schlepperfahrer seinen Sitz verlassen muß.

Nach dem Anheben des Gerätes zur Saatbettherrichtung 1 und des Gerätes zur Bodenlockerung 2 schwenkt dessen Unterteil nach vorne,um, wie in Fig. 10 dargestellt, über die Unterlenkerkonsolen 62 und die Führungsschiene 63 (die nachträglich über Schrauben 65 an den unteren Konsolenplatten 66 des Rahmens 3 anbringbar sind) mittels des Steckers 67 fixiert zu werden. Der Stecker 67 kann in einem Langloch 68 der Leitschiene 63 in jeder Stellung gehalten werden.

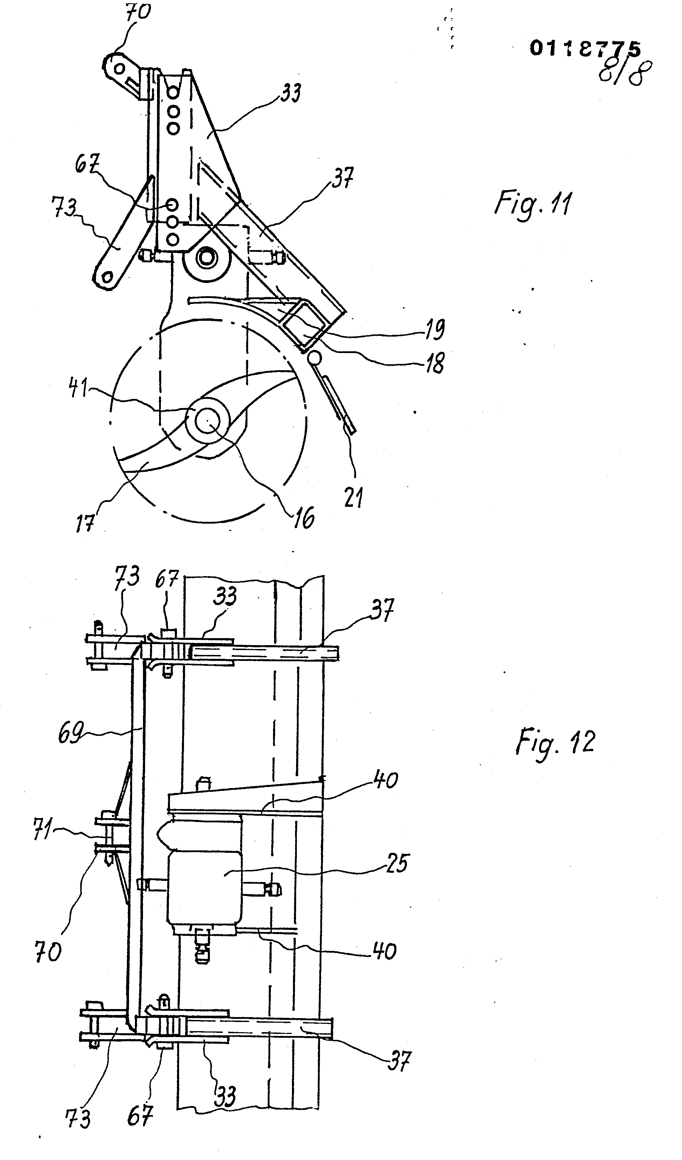

Fig. 11 ÷ 12 zeigen ein weiteres Ausführungsbeispiel, bei welchem die Fangbleche 33 direkt hinter den (genormten) Unterlenkeranschlüssen 73 des Gerätes zur Saatbettherrichtung 2 angeordnet und durch eine Brücke 69 verbunden sind, auf deren Mitte der Oberlenkeranschluß 70 mit Steckb-olzen 71 für das Dreipunktgestänge des Schleppers (nicht dargestellt) angeordnet ist.

Diese Variante ermöglicht insbesondere, ähnlich wie das Ausführungsbeispiel Fig. 9, eine besonders einfache Kupplung beider Geräte durch den Schlepperfahrer, ohne daß dieser für den eigentlichen Kupplungsvorgang seinen Sitz verlassen müßte. Nach erfolgtem Ankuppeln muß der Schlepperfahrer oder eine andere Person ohnehin die seitlichen Abstellstützen 72 (Fig. 6) des Gerätes zur Saatbettherrichtung 2 hochklappen und

- 13 -

dazu unter Umständen den Schleppersitz verlassen. (Diese Abstellstützen 72 sind notwendig, weil das Gerät zur Saatbettherrichtung 1 in der Regel erheblich höher steht, als die Lockerungsschare 10 der Stiele 7.) Er kann daher bei dieser Gelegenheit auch den Sicherungsstecker 56 bzw. 67 anbringen (Fig. 9).

In sinngemäß gleicher Weise können auch andere Arbeitsgeräte wahlweise durch Schnellverschluß starr, aber höheneinstellbar oder über Lenker höhenbeweglich miteinander verbunden werden, z.B. ein Schichtengrubber mit einer Packerwalze oder die Rotoregge mit einer Drillmaschine usw.

# B e z u g s z e i c h e n l i s t e

| | |
|---|---|
| 1 | Gerät zur Bodenlockerung |
| 2 | Gerät zur Saatbettherrichtung |
| 3 | Rahmen |
| 3a | hintere Kante |
| 4 | Unterlenkerkonsole |
| 5 | Oberlenkerkonsole |
| 6 | Klemmhalter |
| 7 | Haltestiel |
| 7a | vordere Stelle |
| 7b | hintere Kante |
| 8 | Verschleißleiste |
| 9 | Anschraubscharhalter |
| 10 | Blattschar |
| 11 | Schlepper |
| 12 | Rahmen |
| 13 | Lagerschilde |
| 14 | Klemmlager |
| 15 | Lagerbuchsen |
| 16 | Welle |
| 17 | Radialzinken |
| 17a | Bewegungsbahn |
| 18 | Querrohr |
| 19 | Hohlträger |
| 20 | Scharnier |
| 21 | Streichblech |
| 22 | Lagerbügel |
| 23 | Lagerarm |
| 24 | Krümelwalze |
| 25 | Getriebe |
| 26 | Eingangswelle |
| 27 | Abtriebswelle hinten |
| 28 | Abtriebswelle oben seitlich |
| 29 | Abtriebshohlwelle unten |
| 30 | Streben |
| 31 | Fangbleche |
| 32 | Fanghaken |

| 33 | Fangblech |
|----|-----------|
| 34 | Bohrungen |
| 35 | Bolzen |
| 36 | Oberlenker |
| 37 | Konsole |
| 38 | Fangmaul |
| 39 | Stecker |
| 40 | Flanschblech |
| 41 | Naben bzw. Zwischenstücke |
| 42 | Unterlenker |
| 43 | Steckbolzen |
| 44 | Unterlenkerbolzen |
| 45 | Spindel |
| 46 | Kugelauge |
| 47 | Anbaubock (Rotoregge) |
| 48 | Oberlenker |
| 49 | Zusatzbock |
| 50 | Anschlußbolzen |
| 51 | Deckblech |
| 52 | Spindel |
| 53 | Spindelmutter |
| 54 | Spannschloß |
| 55 | Lochplatten |
| 56 | Bolzen |
| 57 | Anschlußkonsole |
| 58 | Spannschloß |
| 59 | Stecker |
| 60 | Fanghaken |
| 61 | Verbindungsbolzen |
| 62 | Unterlenkerkonsole |
| 63 | Leitschiene |
| 64 | Fanghaken |
| 65 | Schrauben |
| 66 | Konsolenplatten |
| 67 | Sicherungsstecker |
| 70 | Oberlenkeranschluß |

| 71 | Steckbolzen |
|----|-------------|
| 72 | Abstellstütze |
| 73 | Unterlenkeranschluß |
| 74 | Anschweißkonsolen |
| 75 | Unterlenker |
| 76 | Oberlenker |
| 77 | Oberlenkerkonsole |

Patentansprüche

1. Kombination wenigstens eines Gerätes zur Bodenlockerung
mit einem sich quer zur Fahrtrichtung erstreckenden,
mit dem Kraftheber eines Schleppers kuppelbarem Rahmen,
an dem Haltestiele für an deren unterem Ende angebrachte
Lockerungsschare befestigt sind, mit einem weiteren Arbeitsgerät, z.B. zur Saatbettherrichtung, das einen quer
zur Fahrtrichtung verlaufenden Rahmen aufweist, an dem
wenigstens eine mit Werkzeugen zur Krümelung des Bodens
besetzte, rotierende Welle gelagert ist,
dadurch gekennzeichnet,
daß die Haltestiele (7) des Gerätes zur Bodenlockerung
und die rotierende Welle (16) mit Werkzeugen (17) zur
Krümelung des Bodens je an separaten Tragrahmen (3, 12)
gelagert sind und daß beide Tragrahmen durch Schnellverschlüsse (31,32,55, 59, 60) starr, höheneinstellbar
und leicht lösbar kuppelbar sind.

- 2 -

2. Kombination nach Anspruch 1,

   d a d u r c h  g e k e n n z e i c h n e t ,

   daß beide Geräterahmen (3, 12) wahlweise starr, aber höheneinstellbar, oder mittels Lenkergestänge (42, 48) in größerem
   Abstand voneinander höhenbeweglich miteinander kuppelbar
   sind.

3. Kombination nach Anspruch 1 oder 2,

   d a d u r c h  g e k e n n z e i c h n e t ,

   daß die hinteren Kanten der senkrechten Haltestiele (7) bei
   starrer Verbindung der beiden Rahmen (3, 12) unmittelbar
   vor der rotierenden Welle (16) und zwischen den Bewegungsbahnen (17a) der auf dieser angeordneten Zinken (17) angeordnet sind.

4. Kombination nach Anspruch 3,

   d a d u r c h  g e k e n n z e i c h n e t ,

   daß die senkrechten Haltestiele (7) unterhalb des Tragrahmens
   (3) angeordnet sind.

5. Kombination nach Anspruch 3,

   d a d u r c h  g e k e n n z e i c h n e t ,

   daß die Vorderkante der Haltestiele (7) an der hinteren
   Kante des Tragrahmens (3) anliegt.

6. Kombination nach einem der vorhergehenden Ansprüche,

d a d u r c h  g e k e n n z e i c h n e t ,

daß die hintere Kante (7b) der Haltestiele (7) an der Vorderseite des Rahmens (3) anliegt, so daß die Haltestiele (7)
in einem Abstand vor den Bewegungsbahnen (17a) der rotierenden
Zinken (17) angeordnet sind.

7. Kombination nach einem der vorhergehenden Ansprüche,

d a d u r c h  g e k e n n z e i c h n e t ,

daß der Rahmen (12) über an sich bekannte Unter- und Oberlenker (42, 48) höhenbeweglich an dem Gerät zur Bodenlockerung (1) angeordnet ist, so daß die Haltestiele (7) in
einem Abstand vor den rotierenden Werkzeugen (17) angeordnet
sind.

8. Kombination nach einem der vorhergehenden Ansprüche,

d a d u r c h  g e k e n n z e i c h n e t ,

daß an der Oberlenkerkonsole (5) des Rahmens (3) des
Gerätes zur Bodenlockerung (1) eine zusätzliche Lochplatte
(55) vorzugsweise lösbar befestigt ist, an deren Rückseite
stufenlos oder in einzelnen Stufen höhenverstellbar ein Fanghaken (60) anbringbar ist, der beim Ankuppeln des Gerätes
zur Saatbettherrichtung (2) unter einen Bolzen (61) greift,
und daß am Gerät zur Bodenlockerung (1) mit Langlöchern
versehene Leitschienen (63) anbringbar sind.

- 4 -

9. Kombination nach einem der vorhergehenden Ansprüche,

d a d u r c h  g e k e n n z e i c h n e t ,

daß die Kupplungsteile (31,33,32) im Bereich nahe der äußeren Begrenzung der Arbeitsgeräte (1 bzw. 2) an den beiden Rahmen (3, 12) angeordnet sind.

10. Kombination nach einem der vorhergehenden Ansprüche,

d a d u r c h  g e k e n n z e i c h n e t ,

daß stufenlos verstellbare Spindeln oder ähnliche Mittel höhenverstellbar und starr zwischen den Rahmen (3 und 12) angeordnet sind.

11. Kombination nach einem der vorhergehenden Ansprüche,

d a d u r c h  g e k e n n z e i c h n e t ,

daß das Gerät zur Saatbettherrichtung (2) (bei abgenommenem Fanghaken) wahlweise auch über an sich bekannte Oberlenker (48) und zwei am Gerät zur Bodenlockerung anbringbare, an sich bekannte Unterlenker (42) , die durch Verstellspindeln (52) in an sich bekannter Weise an zwei am Rahmen (3) angebrachte Kugelaugen (46) höhenbeweglich sind und in einem größeren Abstand mit dem Rahmen (3) des Gerätes zur Bodenlockerung kuppelbar ist.

- 5 -

12. Kombination gemäß einem der vorhergehenden Ansprüche,

d a d u r c h  g e k e n n z e i c h n e t ,

daß das Gerät zur Saatbettherrichtung (2) mit einem zusätzlichen Anbaubock (49) kuppelbar ist, der einen nach vorne verlegten Anschlußbolzen (50) für den Unterlenker des Schleppers und eine sich über die Breite des Gerätes erstreckende Abdeckplatte für die rotierenden Zinken (17) aufweist.

13. Gerätekombination nach einem der vorhergehenden Ansprüche,

d a d u r c h  g e k e n n z e i c h n e t ,

daß mehrere Arbeitsgeräte zur Bodenlockerung, Saatbettherrichtung, bzw. Packerwalzen, Drillmaschinen o.ä. jeweils auf der Vorder- und Rückseite mit gleichartigen und zueinander passenden Kupplungsvorrichtungen ausgerüstet sind, um jeweils verschiedene Arbeitsgeräte starr, leicht lösbar und höheneinstellbar miteinander verbinden zu können.

Fig. 1

0118775

1/8

*Fig. 2*

Fig. 3

3/8
0118775

Fig. 4

Fig. 5

Fig. 6

Fig. 7

0118775
6/8

Fig.8

Fig.9

Fig.10

*Fig. 11*

*Fig. 12*